# EUROPEAN PATENT SPECIFICATION

(11) **EP 3 575 190 B1**
(45) Date of publication and mention of the grant of the patent: **09.06.2021**
(21) Application number: 18213979.0
(22) Date of filing: 19.12.2018
(51) Int. Cl.: B62D 25/12, E05B 83/24, E05B 15/04, E05B 83/42, B62D 49/00

(54) **WORKING VEHICLE**
NUTZFAHRZEUG
VÉHICULE DE TRAVAIL

(30) Priority: 01.06.2018 JP 2018105847
(43) Date of publication of application: 04.12.2019
(73) Proprietor: Iseki & Co., Ltd., Matsuyama-shi, Ehime 799-2692 (JP)
(72) Inventor: TAKEI, Yu, Tobe-cho, Iyo-gun, Ehime 791-2193 (JP)
(74) Representative: Spengler, Robert

(56) References cited:
- JP-A- H0 826 140
- JP-A- H05 139 339
- JP-A- 2012 183 956

## Description

### BACKGROUND OF THE INVENTION

### Field of the Invention

The present invention relates to a working vehicle such as an agricultural tractor or the like.

### Related Art of the Invention

Known is a working vehicle for which an operation to release a lock of the bonnet can be readily performed with a lever (for example, refer to Japanese Patent Application Publication No. Hei 5-139339).

Document JP 2012 183956 A discloses a working vehicle which comprises an openable-and-closable bonnet, which covers an engine room; a bonnet fixer provided in the engine room, which locks the closed bonnet; and a lock member provided on an inner wall of the bonnet, which engages with the bonnet fixer. The bonnet fixer possesses a first rotating member; a second rotating member; and a bracket part to which each of the first rotating member and the second rotating member is attached so as to be independently rotatable. When the bonnet is being closed, the lock member engages with the first rotating member.

### SUMMARY OF THE INVENTION

However, in the conventional working vehicles described above, danger accompanying an unintentional opening of the bonnet exists.

A purpose of the present invention is, in consideration of the conventional problem described above, to furnish a working vehicle for which danger accompanying an unintentional opening of the bonnet can be reduced.

The 1^{st} aspect of the present invention is a working vehicle, comprising:
an openable-and-closable bonnet (70), which covers an engine room (60);
a bonnet fixer (100) provided in the engine room (60), which locks the closed bonnet (70); and
a lock member (500) provided on an inner wall of the bonnet (70), which engages with the bonnet fixer (100), wherein
the bonnet fixer (100) possesses: a first rotating member (200); a second rotating member (300); and a bracket part (400) to which each of the first rotating member (200) and the second rotating member (300) is attached so as to be independently rotatable, and
when the bonnet (70) is being closed, the lock member (500) engages with the first rotating member (200),
**characterized in that**
when the bonnet (70) which has been closed is opened, the first rotating member (200) is connected with the second rotating member (300) by utilizing a jig (600), the second rotating member (300) is made to rotate by utilizing the jig (600), and thereby engagement of the lock member (500) with the first rotating member (200) is released.

By means of this, since when the bonnet (70) which has been closed is opened, the first rotating member (200) is connected with the second rotating member (300) by utilizing a jig (600), the second rotating member (300) is made to rotate by utilizing the jig (600), and thereby engagement of the lock member (500) with the first rotating member (200) is released, danger accompanying an unintentional opening of the bonnet (70) can be reduced.

The 2^{nd} aspect of the present invention is the working vehicle according to the 1^{st} aspect of the present invention, wherein
the first rotating member (200) possesses a first jig-engaging part (201),
the second rotating member (300) possesses a second jig-engaging part (301), and
the jig (600) is made to engage with the first jig-engaging part (201) and the second jig-engaging part (301), and thereby the first rotating member (200) is connected with the second rotating member (300).

By means of this, since the jig (600) is made to engage with the first jig-engaging part (201) and the second jig-engaging part (301), and thereby the first rotating member (200) is connected with the second rotating member (300), the configuration of the bonnet fixer (100) can be simplified.

The 3^{rd} aspect of the present invention is the working vehicle according to the 1^{st} or 2^{nd} aspect of the present invention, wherein
the first rotating member (200) is attached to a rear face of the bracket part (400), and
the second rotating member (300) is attached to a front face of the bracket part (400).

By means of this, direct access to the first rotating member (200) by a finger or the like is not easy.

The 4^{th} aspect of the present invention is the working vehicle according to any one of the 1^{st} to 3^{rd} aspects of the present invention, wherein
the bracket part (400) forms at a back side a guarded space for housing the first rotating member (200).

By means of this, to open the bonnet (70) without the jig (600) is difficult.

The 5^{th} aspect of the present invention is the working vehicle according to the 2^{nd} aspect of the present invention, wherein
the first jig-engaging part (201) is a penetrating-hole,
the second jig-engaging part (301) is a penetrating-hole, and
when the bonnet (70) which has been closed is opened, the jig (600) is rearwardly inserted through the second jig-engaging part (301), a window (413) provided to the bracket part (400), and the first jig-engaging part (201), and is made to abut onto a jig-abutting member (304) standing on a front face of the second rotating member (300).

By means of this, the bonnet (70) which has been closed can be opened without difficulties.

The 1^{st} aspect of the invention which is related to the present invention is the working vehicle according to the 1^{st} aspect of the present invention, wherein
the bracket part (400) possesses: a basal-plate member (410); a left plate member (420); a right plate member (430); and a lower plate member (440),
the left plate member (420) is rearwardly attached from a left end edge part of the basal-plate member (410),
the right plate member (430) is rearwardly attached from a right end edge part of the basal-plate member (410),
the lower plate member (440) is rearwardly attached from a lower end edge part of the basal-plate member (410),
the first rotating member (200) is attached to a rear face of the basal-plate member (410),
the second rotating member (300) is attached to a front face of the basal-plate member (410), and
an upper end face of the left plate member (420), and an upper end face of the right plate member (430) are attached to a baseplate member (700) provided at a lower side of a front part of the engine room (60).

The 2^{nd} aspect of the invention which is related to the present invention is the working vehicle according to the 1^{st} aspect of the invention which is related to the present invention, wherein
on an upper end face of the basal-plate member (410), a notch (411) which receives, when the bonnet (70) is being closed, the lock member (500) is formed.

The 3^{rd} aspect of the invention which is related to the present invention is the working vehicle according to the 1^{st} aspect of the present invention, wherein
the first rotating member (200) possesses a hook (202) with which the lock member (500) is engageable, and
the lock member (500) is a pin member at a tip-end part of which a flange (501) for preventing coming-out from the hook (202) in a pin-axis direction is formed.

By the present invention, a working vehicle for which danger accompanying an unintentional opening of the bonnet is able to be reduced can be furnished.

### BRIEF DESCRIPTION OF THE DRAWINGS

FIG. 1 is a left side view of the agricultural tractor of the embodiment in the present invention;
FIG. 2 is a partial left side view of the neighborhood of the bonnet of the agricultural tractor of the embodiment in the present invention;
FIG. 3 is a partial perspective view of the neighborhood of the baseplate member of the agricultural tractor of the embodiment in the present invention;
FIG. 4 is a partial perspective view (No. 1) of the neighborhood of the bonnet fixer of the agricultural tractor of the embodiment in the present invention;
FIG. 5 is a partial perspective view (No. 2) of the neighborhood of the bonnet fixer of the agricultural tractor of the embodiment in the present invention;
FIG. 6 is a partial perspective view (No. 3) of the neighborhood of the bonnet fixer of the agricultural tractor of the embodiment in the present invention;
FIG. 7 is a partial perspective view (No. 4) of the neighborhood of the bonnet fixer of the agricultural tractor of the embodiment in the present invention;
FIG. 8 is a partial front view of the neighborhood of the bonnet fixer of the agricultural tractor of the embodiment in the present invention;
FIG. 9 is a partial rear view of the neighborhood of the bonnet fixer of the agricultural tractor of the embodiment in the present invention;
FIG. 10 is a partial perspective view (No. 5) of the neighborhood of the bonnet fixer of the agricultural tractor of the embodiment in the present invention;
FIG. 11 is an exploded partial perspective view of the neighborhood of the bonnet fixer of the agricultural tractor of the embodiment in the present invention;
FIG. 12 is a partial perspective view (No. 6) of the neighborhood of the bonnet fixer of the agricultural tractor of the embodiment in the present invention;
FIG. 13 is a partial perspective view of the neighborhood of the lock member of the agricultural tractor of the embodiment in the present invention;
FIG. 14 is a perspective view of the first rotating member of the agricultural tractor of the embodiment in the present invention; and
FIG. 15 is a perspective view of the jig of the agricultural tractor of the embodiment in the present invention.

### Description of the Reference Numerals

- 10: vehicle-body
- 11: front link mechanism
- 12: rear link mechanism
- 20: driving unit
- 21: driving seat
- 22: floor
- 23: steering wheel
- 30: engine
- 40: front-wheel
- 50: rear-wheel
- 60: engine room
- 70: bonnet
- 70a: bonnet main-body part
- 70b: front light part
- 70c: front grille part
- 70d: bonnet attaching part
- 100: bonnet fixer
- 200: first rotating member
- 201: first jig-engaging part
- 202: hook
- 203: round-hole
- 300: second rotating member
- 301: second jig-engaging part
- 302: round-hole
- 303: round-hole
- 304: jig-abutting member
- 305: spring member
- 305a: left end part
- 305b: right end part
- 400: bracket part
- 410: basal-plate member
- 411: notch
- 412: window
- 413: window
- 414: round-hole
- 415: male-screw member
- 416: female-screw member
- 417, 418: metal-washer
- 420: left plate member
- 430: right plate member
- 440: lower plate member
- 500: lock member
- 501: flange
- 600: jig
- 700: baseplate member
- 701: notch
- 702: round-hole
- 710: vehicle-body frame member
- 800: lock member attaching plate
- 801: round-hole
- 802, 803: round-hole
- 810: lock member attaching plate stay
- 811, 812: long-hole
- 813,814: screw member

### DESCRIPTION OF THE EMBODIMENTS

In the following, referring to the drawings, descriptions are given in detail regarding embodiments in the present invention.

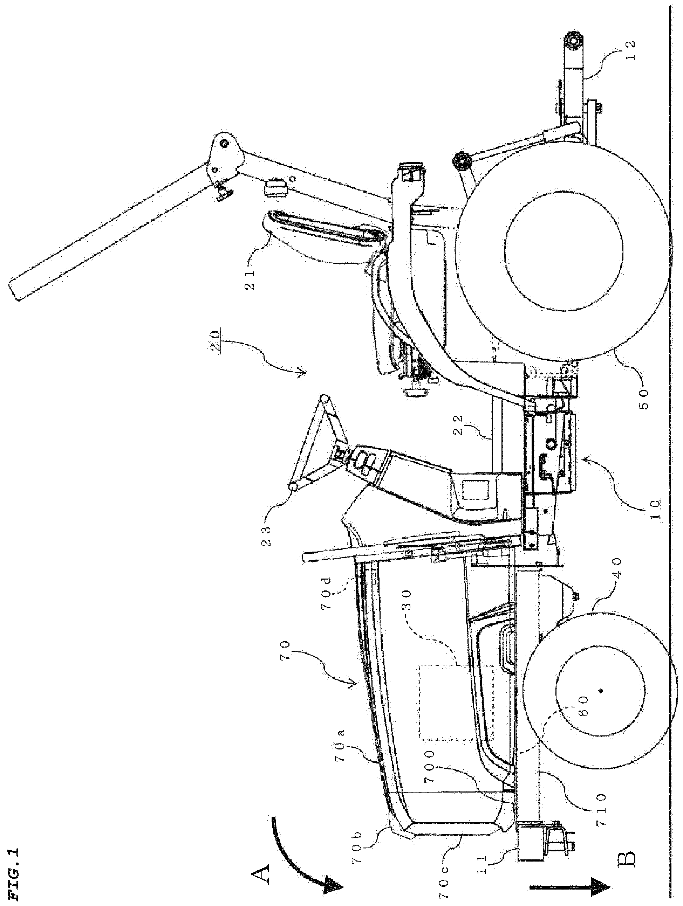

In the beginning, referring to FIGs. 1 to 3, descriptions are specifically given regarding the configuration and action of an agricultural tractor of the present embodiment which is one example of the working vehicle in the present invention.

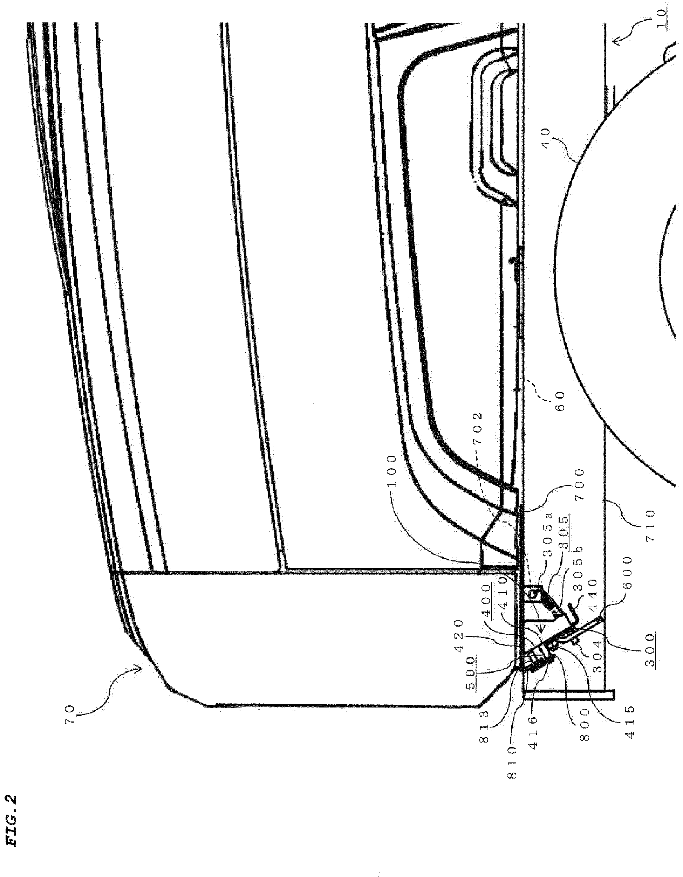

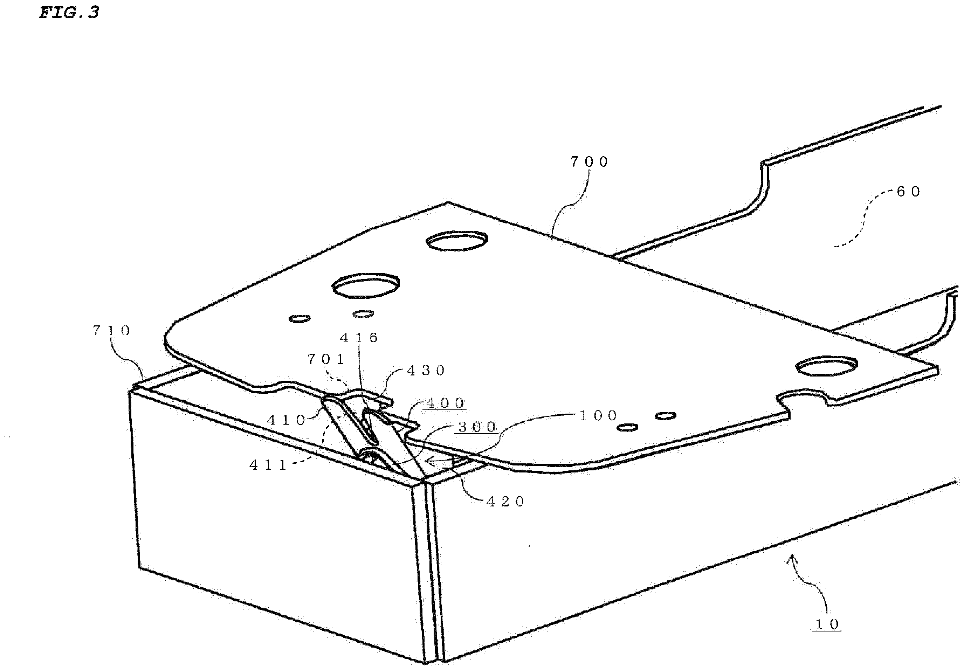

Here, FIG. 1 is a left side view of the agricultural tractor of the embodiment in the present invention, FIG. 2 is a partial left side view of the neighborhood of a bonnet 70 of the agricultural tractor of the embodiment in the present invention, and FIG. 3 is a partial perspective view of the neighborhood of a baseplate member 700 of the agricultural tractor of the embodiment in the present invention.

The agricultural tractor of the present embodiment is viewed from a left upper front side in FIG. 3.

Several configuration elements are sometimes not shown in the drawings and are sometimes shown with transparency or with omission; the same shall apply hereinafter. For example, in FIG. 2, a front link mechanism 11 is not shown, and a vehicle-body frame member 710 is shown with transparency, so that the configurations of a bonnet fixer 100 and the like will become easier to understand.

What is described in the first place is the fundamental configuration and action of the agricultural tractor of the present embodiment. Hence, regarding the configuration and action and the like which are related to the bonnet fixer 100, descriptions are later given in detail.

In an engine room 60 which is the inside of the bonnet 70 of the front part of a vehicle-body 10, a fuel tank, a muffler, a radiator and the like are provided, together with an engine 30 which is made to start up utilizing an ignition key.

Rotary motive force of the engine 30 is transmitted via an HST (Hydro Static Transmission) to a speed-changing device inside the transmission case provided below a floor 22 of a driving unit 20. And, the rotary motive force with speed-decreasing having been carried out at the speed-changing device is transmitted to a left-and-right pair of front-wheels 40, a left-and-right pair of rear-wheels 50, and the like.

In the driving unit 20 behind the engine 30, a steering wheel 23, a frontward/rearward movement lever and the like are provided. Behind the steering wheel 23, a driving seat 21 is provided. The hose cover covers hoses which are joined to the steering wheel 23. On the floor 22 at the left side of the operation column cover, a clutch pedal and the like are arranged. On the floor 22 at the right side of the operation column cover, a left brake pedal and a right brake pedal, an accelerator pedal, and the like are arranged.

To the front part of the vehicle-body 10, the front link mechanism 11 is provided. To the rear part of the vehicle-body 10, a rear link mechanism 12 which is a 3-point link mechanism in which a working machine is installed is provided.

The bonnet 70 is an openable-and-closable bonnet, which covers the engine room 60.

A bonnet main-body part 70a is, so as to conform to a hood front-opening style, rotatably attached to the vehicle-body 10 with a left-and-right pair of bonnet attaching parts 70d behind the engine room 60. Not only a front grille part 70c for the front grille which is for engine-cooling ventilation, but a front light part 70b for the left-and-right pair of the front lights which are for lighting is integrated with the bonnet main-body part 70a.

The bonnet fixer 100 is a fixer provided in the engine room 60, which locks the closed bonnet 70.

A lock member 500 is a member provided on the inner wall of the bonnet 70, which engages with the bonnet fixer 100.

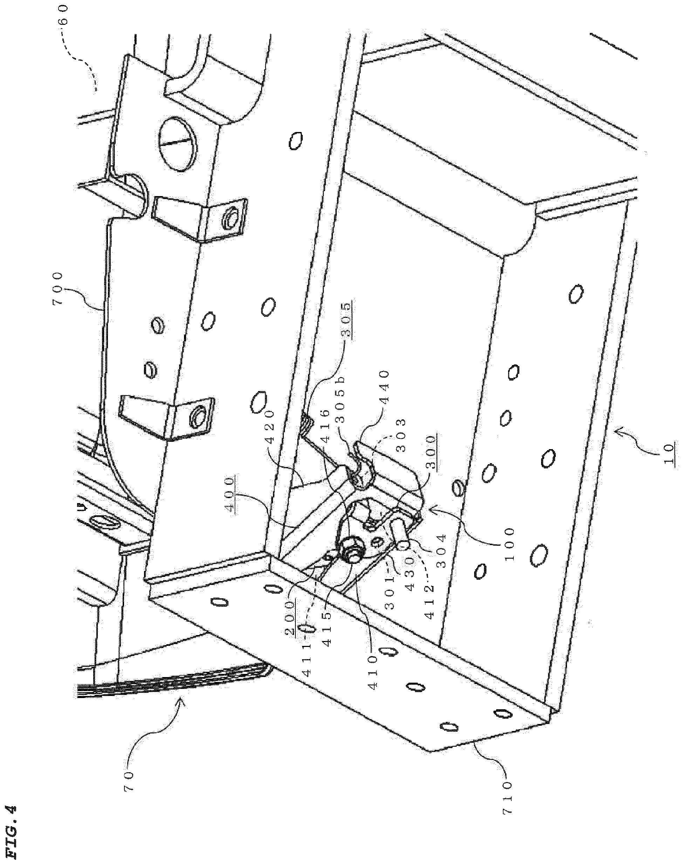

Next, mainly referring to FIGs. 4 to 10, descriptions are more specifically given regarding the configuration and action of the agricultural tractor of the present embodiment.

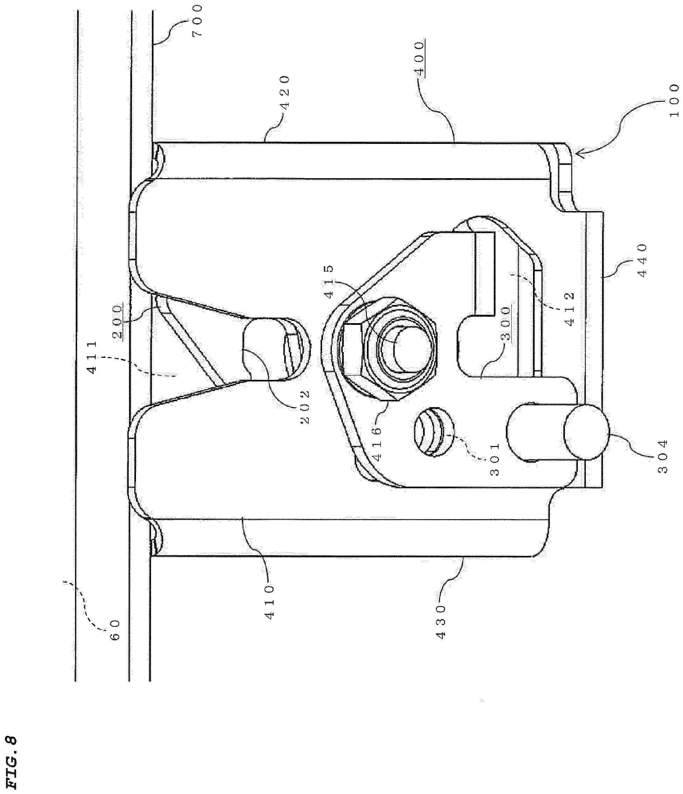

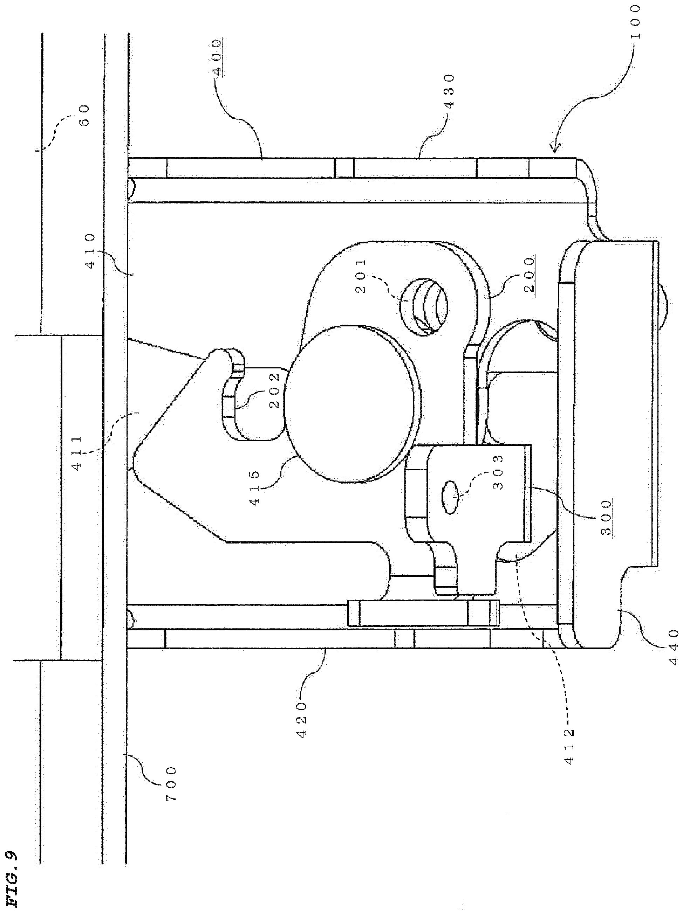

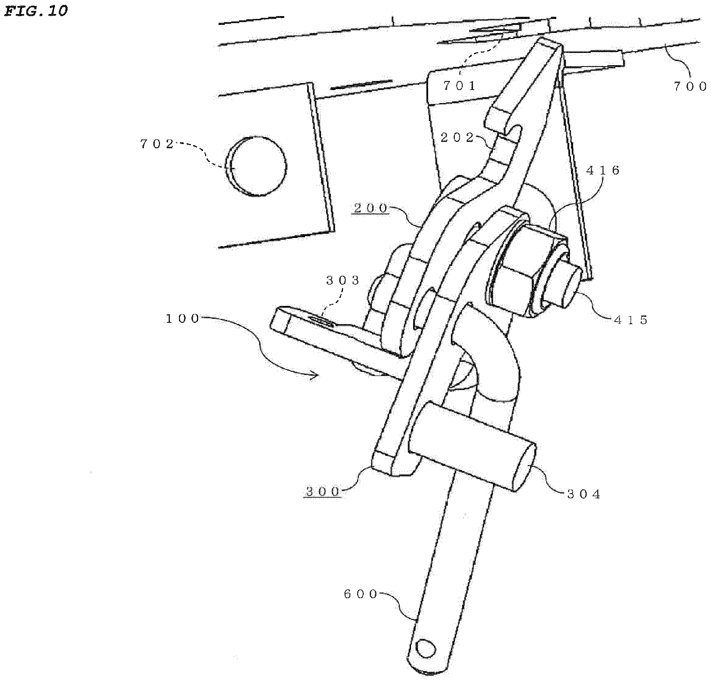

Here, FIGs. 4 to 7 are partial perspective views (Nos. 1 to 4) of the neighborhood of the bonnet fixer 100 of the agricultural tractor of the embodiment in the present invention, FIG. 8 is a partial front view of the neighborhood of the bonnet fixer 100 of the agricultural tractor of the embodiment in the present invention, FIG. 9 is a partial rear view of the neighborhood of the bonnet fixer 100 of the agricultural tractor of the embodiment in the present invention, and FIG. 10 is a partial perspective view (No. 5) of the neighborhood of the bonnet fixer 100 of the agricultural tractor of the embodiment in the present invention.

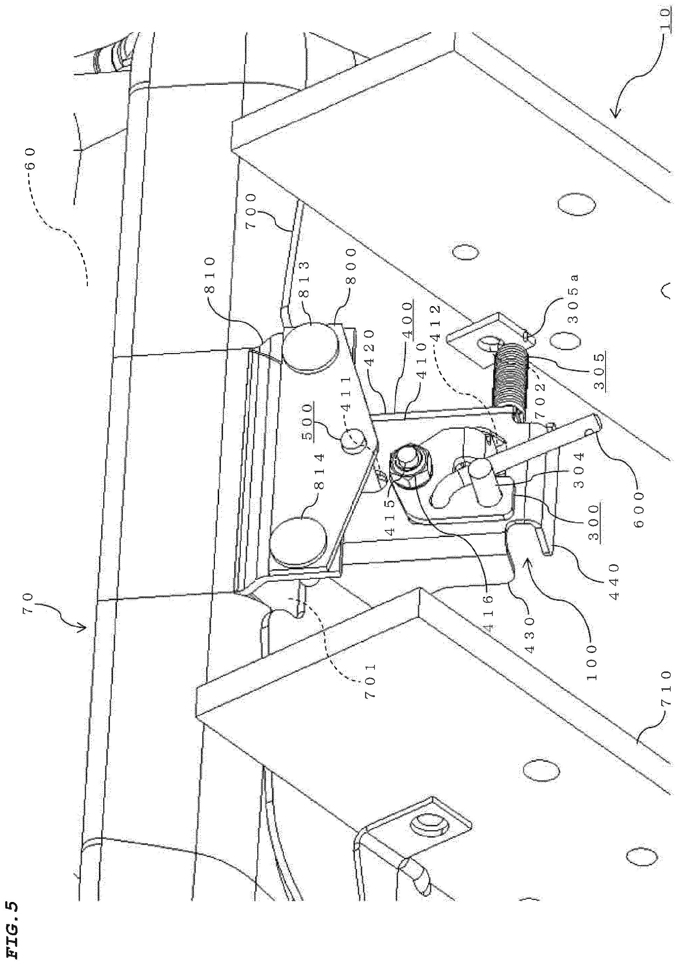

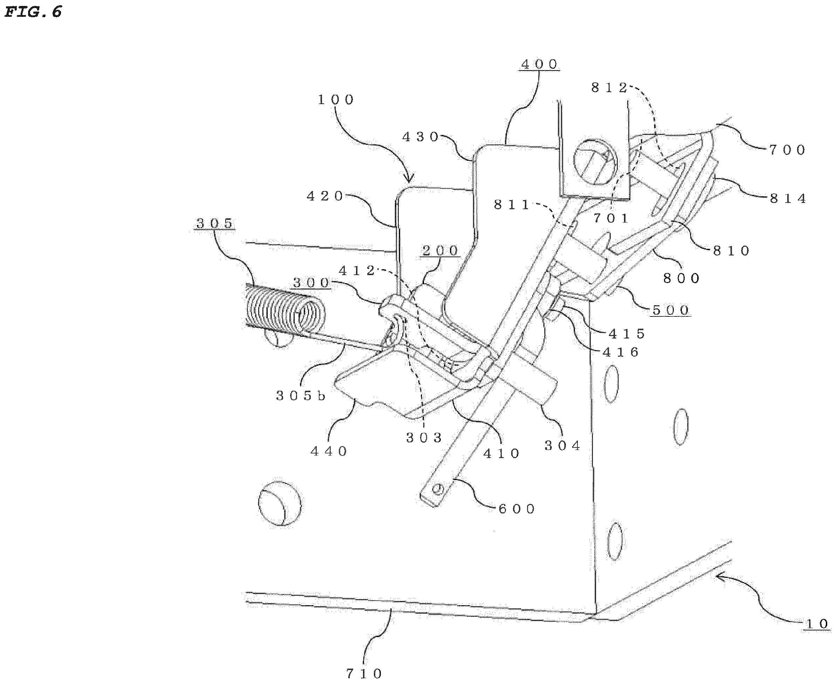

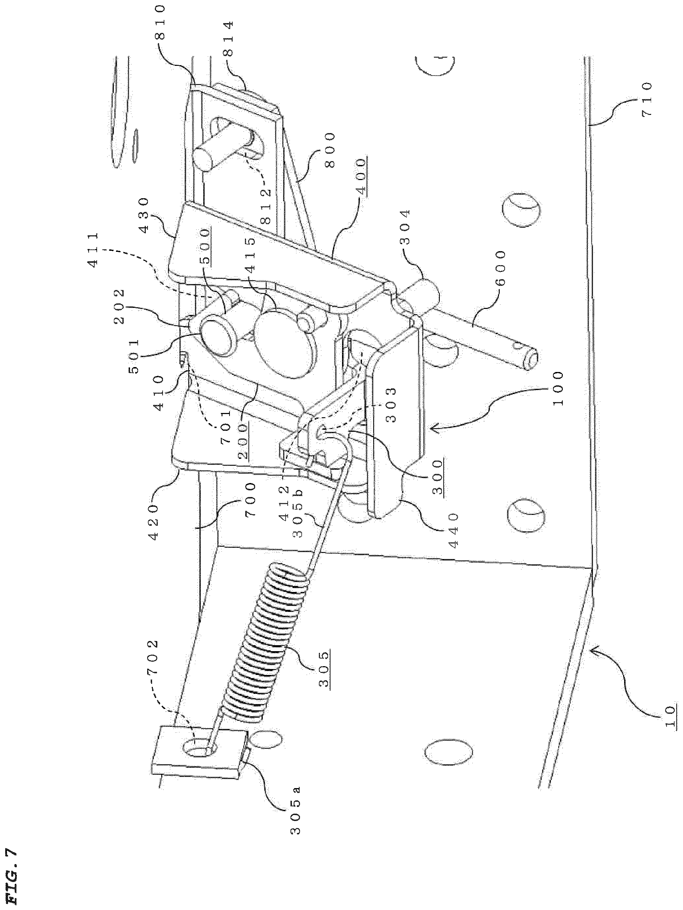

The agricultural tractor of the present embodiment is viewed from a left lower front side in FIG. 4, is viewed from a right lower front side in FIG. 5, and is viewed from a right lower rear side in FIGs. 6 and 7.

In FIG. 4, the state where the bonnet 70 is not being closed is shown. In FIGs. 5 to 7, the state where the bonnet 70 is being closed is shown.

When the bonnet 70 which has been opened is closed along the orientation of the arrows A and B, the lock member 500 passes a notch 701 provided to the front part of the baseplate member 700, and downwardly moves.

When the bonnet 70 is being closed, the lock member 500 provided to the lower part of the bonnet 70 engages with the bonnet fixer 100 provided below the baseplate member 700, and the frontmost face of the bonnet 70 roughly agrees with the frontmost face of the vehicle-body frame member 710.

The bonnet fixer 100 possesses: a first rotating member 200; a second rotating member 300; and a bracket part 400 to which each of the first rotating member 200 and the second rotating member 300 is attached so as to be independently rotatable.

When the bonnet 70 is being closed, the lock member 500 engages with the first rotating member 200.

When the bonnet 70 which has been closed is opened, the first rotating member 200 is connected with the second rotating member 300 by utilizing a jig 600, the second rotating member 300 is made to rotate by utilizing the jig 600, and thereby engagement of the lock member 500 with the first rotating member 200 is released.

Since the second rotating member 300 as a rotating operation plate is configured as a member different from the first rotating member 200 as a lock plate, a hood-opener is realized which reduces danger accompanying an unintentional opening of the bonnet which leads to an accident.

Additionally, the jig 600 is, in the present embodiment, an L-shaped jig for connecting the first rotating member 200 with the second rotating member 300 and making the second rotating member 300 rotate but may be, in the embodiment of a variant example, a jig which possesses: an I-shaped jig part for connecting the first rotating member 200 with the second rotating member 300; and a U-shaped jig part for being made to engage with the I-shaped jig part and making the second rotating member 300 rotate.

The first rotating member 200 possesses a first jig-engaging part 201.

Additionally, the first jig-engaging part 201 is, in the present embodiment, a penetrating-hole but may be, in the embodiment of a variant example, a notch or a concavity.

The second rotating member 300 possesses a second jig-engaging part 301.

Additionally, the second jig-engaging part 301 is, in the present embodiment, a penetrating-hole but may be, in the embodiment of a variant example, a notch.

The jig 600 is made to engage with the first jig-engaging part 201 and the second jig-engaging part 301, and thereby the first rotating member 200 is connected with the second rotating member 300.

Without penetrating-hole infixing of the jig 600 as a hood-opening tool which makes the first rotating member 200 rotate in the lock-releasing orientation opposite to the lock orientation, since the first rotating member 200 is not connected with the second rotating member 300, then the first rotating member 200 at the rear side is not rotated even if the second rotating member 300 at the front side is rotated.

The first rotating member 200 is attached to the rear face of the bracket part 400, and the second rotating member 300 is attached to the front face of the bracket part 400.

The bracket part 400 forms at the back side a guarded space for housing the first rotating member 200.

When the bonnet 70 which has been closed is opened, the jig 600 is rearwardly inserted through the second jig-engaging part 301, a window 413 provided to the bracket part 400, and the first jig-engaging part 201, and is made to abut onto a jig-abutting member 304 standing on the front face of the second rotating member 300.

Specifically, descriptions regarding the bracket part 400 are given as follows.

The bracket part 400 possesses: a basal-plate member 410; a left plate member 420; a right plate member 430; and a lower plate member 440.

The left plate member 420 is rearwardly attached from the left end edge part of the basal-plate member 410.

The right plate member 430 is rearwardly attached from the right end edge part of the basal-plate member 410.

The lower plate member 440 is rearwardly attached from the lower end edge part of the basal-plate member 410.

The first rotating member 200 is attached to the rear face of the basal-plate member 410.

The second rotating member 300 is attached to the front face of the basal-plate member 410.

The upper end face of the left plate member 420, and the upper end face of the right plate member 430 are attached to the baseplate member 700 provided at the lower side of the front part of the engine room 60.

The bracket part 400 is attached to the lower face of the baseplate member 700 with welding, and a space for operating the jig 600 is sufficiently ensured below the engine room 60.

Additionally, the bracket part 400 is, in the present embodiment, configured as a member different from the baseplate member 700 but may be, in the embodiment of a variant example, configured as a part of the baseplate member 700 or the vehicle-body frame member 710.

The basal-plate member 410 attached to the lower face of the baseplate member 700 so as to frontwardly incline cooperates with the left plate member 420, the right plate member 430 and the lower plate member 440, and the baseplate member 700, and forms at the back side a guarded space for housing the first rotating member 200. Therefore, since direct access to the first rotating member 200 by a finger or the like is not easy, to open the bonnet 70 without the jig 600 is difficult.

On the upper end face of the basal-plate member 410, a notch 411 which receives, when the bonnet 70 is being closed, the lock member 500 is formed.

The first rotating member 200 possesses a hook 202 with which the lock member 500 is engageable.

When the bonnet 70 which has been opened is closed, the lock member 500 surely engages with the hook 202 provided on the upper end face of the first rotating member 200. And, since the first rotating member 200 firmly presses down from above the lock member 500 received by the notch 411 provided on the upper end face of the front face of the bracket part 400, when the bonnet 70 is being closed, the lock member 500 engages with the hook 202 provided to the first rotating member 200 without rattling due to vehicle-body vibration and the like.

Additionally, the second rotating member 300 does not possess, in the present embodiment, a hook like the hook 202 but may possess, in the embodiment of a variant example, a hook like the hook 202.

The lock member 500 is a pin member at the tip-end part of which a flange 501 for preventing coming-out from the hook 202 in the pin-axis direction is formed.

The tip-end shape of the lock member 500 is a hood-pin coming-out stopper rivet shape for which the outer-diameter of the flange 501 is large in comparison with the lock member engaging-width of the hook 202 provided to the first rotating member 200, and the lock member receiving-width of the notch 411 provided to the basal-plate member 410 of the bracket part 400. Therefore, even if the bonnet 70 which is being closed is frontwardly pulled unintentionally, engagement of the lock member 500 with the first rotating member 200 is not released.

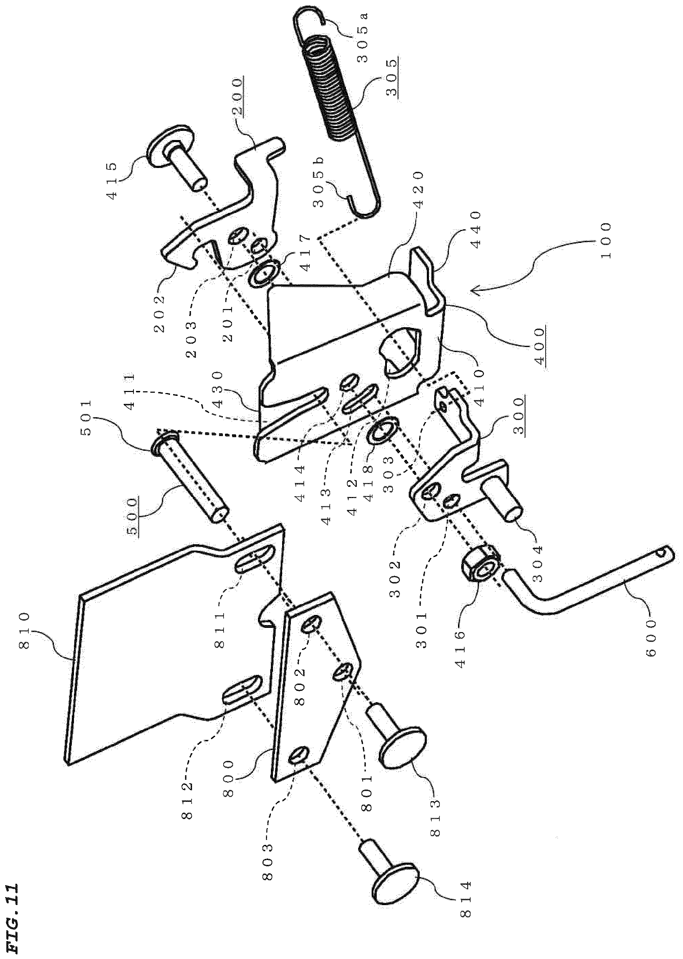

Next, mainly referring to FIGs. 11 to 15, descriptions are still more specifically given regarding the configuration and action of the agricultural tractor of the present embodiment.

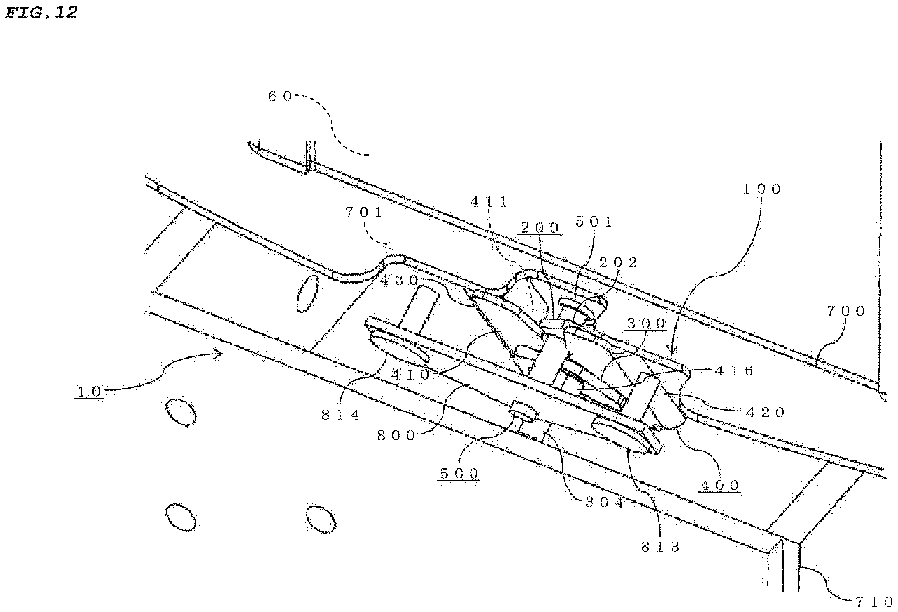

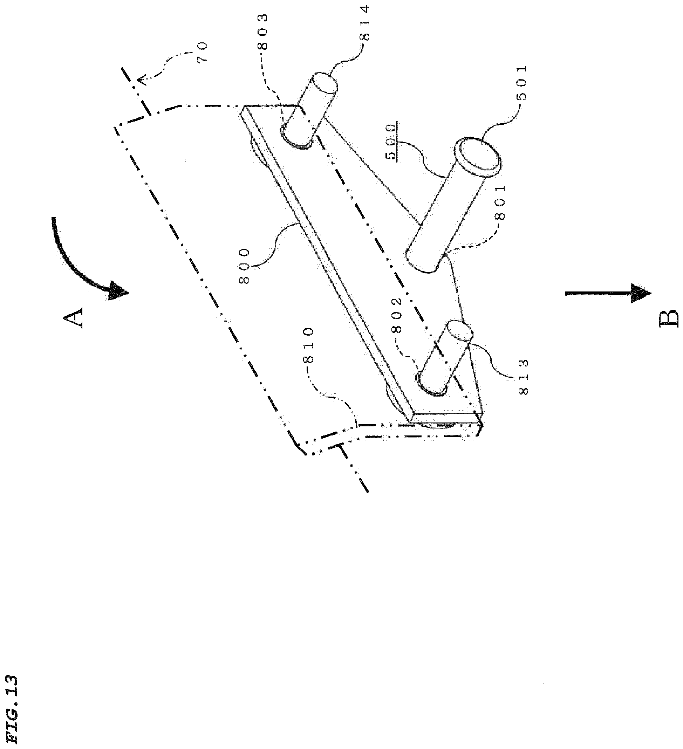

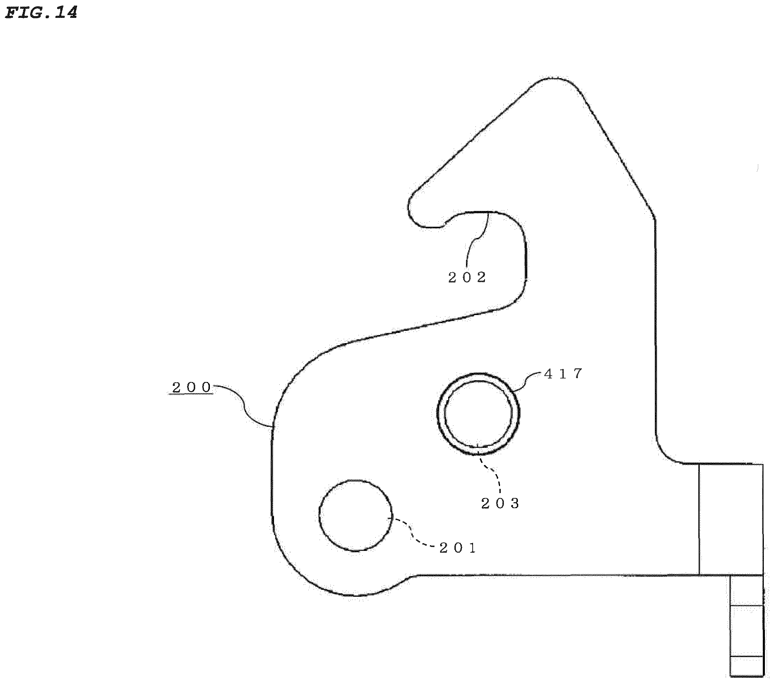

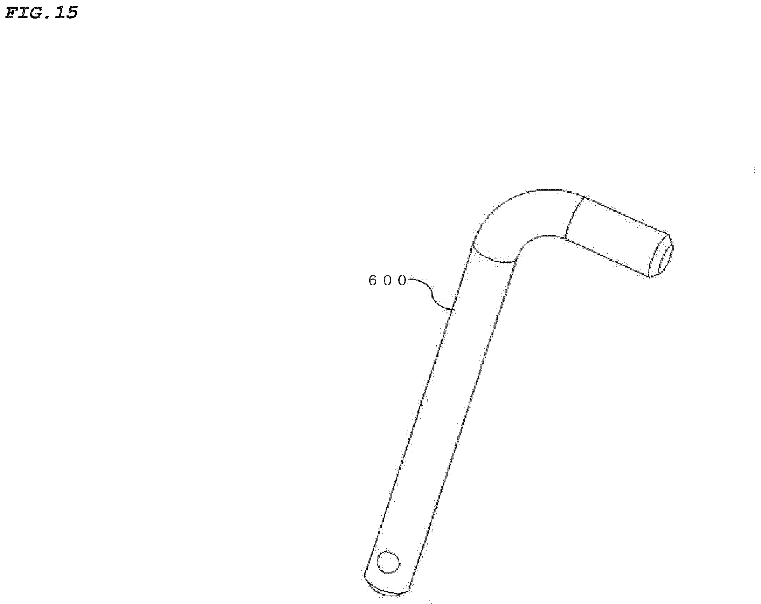

Here, FIG. 11 is an exploded partial perspective view of the neighborhood of the bonnet fixer 100 of the agricultural tractor of the embodiment in the present invention, FIG. 12 is a partial perspective view (No. 6) of the neighborhood of the bonnet fixer 100 of the agricultural tractor of the embodiment in the present invention, FIG. 13 is a partial perspective view of the neighborhood of the lock member 500 of the agricultural tractor of the embodiment in the present invention, FIG. 14 is a perspective view of the first rotating member 200 of the agricultural tractor of the embodiment in the present invention, and FIG. 15 is a perspective view of the jig 600 of the agricultural tractor of the embodiment in the present invention.

In FIG. 11, the combination-relationship of configuration elements is shown with dotted lines.

The first rotating member 200 and the second rotating member 300 are, utilizing a male-screw member 415, a female-screw member 416, and metal-washers 417 and 418, attached to the bracket part 400.

The male-screw member 415 is frontwardly inserted through a round-hole 203 provided to the first rotating member 200, a round-hole 414 provided to the basal-plate member 410 of the bracket part 400, and a round-hole 302 provided to the second rotating member 300, and is made to screw on the female-screw member 416. The metal-washer417 is arranged between the round-hole 203 and the round-hole 414, and the metal-washer 418 is arranged between the round-hole 414 and the round-hole 302.

A left end part 305a of a spring member 305 is made to engage with a round-hole 702 of the baseplate member 700, and a right end part 305b of the spring member 305 is made to engage with a round-hole 303 of the second rotating member 300.

The second rotating member 300 rearwardly inserted through a window 412 provided to the basal-plate member 410 of the bracket part 400 is, since energized in the lock orientation for holding the lock state by the spring member 305, made to abut onto the first rotating member 200, and the first rotating member 200 onto which the second rotating member 300 is made to abut is made to abut onto the right plate member 430 of the bracket part 400.

The second rotating member 300 which rearwardly protrudes and is energized by the spring member 305 also functions as a lock-hook-returning member, the first rotating member 200 onto which the second rotating member 300 is made to abut also functions as a lock-hook-returning receiving member, and the bracket part 400 onto which the first rotating member 200 is made to abut also functions as a stopper member. And, since the second rotating member 300 is always energized towards a left rear side, when the bonnet 70 is being closed, the lock member 500 engages with the hook 202 provided to the first rotating member 200 without rattling due to vehicle-body vibration and the like. Therefore, a lock-hook-fixing function which realizes firm fixing of the lock member 500 when the bonnet 70 is being closed is realized together with a lock-hook-returning function which realizes smooth returning of the first rotating member 200 when the bonnet 70 which has been closed is opened.

When the bonnet 70 which has been closed is opened, the jig 600 is rearwardly inserted through the second jig-engaging part 301 provided to the second rotating member 300, the window 413 provided to the basal-plate member 410 of the bracket part 400, and the first jig-engaging part 201 provided to the first rotating member 200, and is made to abut onto the jig-abutting member 304 standing on the front face of the second rotating member 300.

Since the window 412 through which the second rotating member 300 is inserted possesses sufficient size, and the window 413 through which the jig 600 is inserted also possesses sufficient size, the first rotating member 200 and the second rotating member 300 are made to rotate by utilizing the jig 600.

Since the jig 600 is made to abut onto the jig-abutting member 304, the bonnet 70 which has been closed can be opened without difficulties.

The lock member 500 which is engageable with the hook 202 provided to the first rotating member 200 and is, when the bonnet 70 is being closed, received by the notch 411 provided to the basal-plate member 410 of the bracket part 400 is frontwardly inserted through a round-hole 801 provided to a lock member attaching plate 800.

The lock member attaching plate 800 is, utilizing screw members 813 and 814, attached to a lock member attaching plate stay 810 provided on the inner wall of the bonnet 70.

The screw member 813 is rearwardly inserted through a round-hole 802 provided to the lock member attaching plate 800, and a long-hole 811 provided to the lock member attaching plate stay 810. The screw member 814 is rearwardly inserted through a round-hole 803 provided to the lock member attaching plate 800, and a long-hole 812 provided to the lock member attaching plate stay 810.

Since the long-hole 811 through which the screw member 813 is inserted possesses sufficient length in the up-and-down direction, and the long-hole 812 through which the screw member 814 is inserted also possesses sufficient length in the up-and-down direction, the position of the lock member attaching plate 800 in the up-and-down direction is adjustable.

A working vehicle in the present invention, for which danger accompanying an unintentional opening of the bonnet can be reduced, is useful, for example, for the purpose of utilizing for a working vehicle such as an agricultural tractor or the like.

## Claims

1. A working vehicle, comprising:
an openable-and-closable bonnet (70), which covers an engine room (60);
a bonnet fixer (100) provided in the engine room (60), which locks the closed bonnet (70); and
a lock member (500) provided on an inner wall of the bonnet (70), which engages with the bonnet fixer (100), wherein
the bonnet fixer (100) possesses: a first rotating member (200); a second rotating member (300); and a bracket part (400) to which each of the first rotating member (200) and the second rotating member (300) is attached so as to be independently rotatable, and
when the bonnet (70) is being closed, the lock member (500) engages with the first rotating member (200),
**characterized in that**
when the bonnet (70) which has been closed is opened, the first rotating member (200) is connected with the second rotating member (300) by utilizing a jig (600), the second rotating member (300) is made to rotate by utilizing the jig (600), and thereby engagement of the lock member (500) with the first rotating member (200) is released.

2. The working vehicle according to claim 1, wherein
the first rotating member (200) possesses a first jig-engaging part (201),
the second rotating member (300) possesses a second jig-engaging part (301), and
the jig (600) is made to engage with the first jig-engaging part (201) and the second jig-engaging part (301), and thereby the first rotating member (200) is connected with the second rotating member (300).

3. The working vehicle according to claim 1 or 2, wherein
the first rotating member (200) is attached to a rear face of the bracket part (400), and
the second rotating member (300) is attached to a front face of the bracket part (400).

4. The working vehicle according to any one of claims 1 to 3, wherein
the bracket part (400) forms at a back side a guarded space for housing the first rotating member (200).

5. The working vehicle according to claim 2, wherein
the first jig-engaging part (201) is a penetrating-hole,
the second jig-engaging part (301) is a penetrating-hole, and
when the bonnet (70) which has been closed is opened, the jig (600) is rearwardly inserted through the second jig-engaging part (301), a window (413) provided to the bracket part (400), and the first jig-engaging part (201), and is made to abut onto a jig-abutting member (304) standing on a front face of the second rotating member (300).

## Patentansprüche

1. Nutzfahrzeug, umfassend:
eine zu öffnende und zu verschließende Haube (70), die einen Motorraum (60) abdeckt;
eine Haubenfixieranordnung (100), die im Motorraum (60) bereitgestellt ist, die die geschlossene Haube (70) verriegelt; und
ein Verriegelungselement (500), das auf einer inneren Wand der Haube (70) bereitgestellt ist, das mit der Haubenfixieranordnung (100) eingreift, wobei
die Haubenfixieranordnung (100) Folgendes umfasst: ein erstes Drehelement (200); und ein zweites Drehelement (300); und einen Klammerteil (400), an den jedes des ersten Drehelements (200) und des zweiten Drehelements (300) befestigt ist, so dass des unabhängig drehbar ist, und
wenn die Haube (70) geschlossen ist, das Verriegelungselement (500) mit dem ersten Drehelement (200) eingreift,
**dadurch gekennzeichnet, dass**
wenn die Haube (70), die geschlossen war, geöffnet wird, das erste Drehelement (200) mit dem zweiten Drehelement (300) durch die Verwendung einer Spannvorrichtung (600) verbunden wird, das zweite Drehelement (300) dazu veranlasst wird, sich durch die Verwendung der Spannvorrichtung (600) zu drehen, und dadurch der Eingriff des Verriegelungselements (500) mit dem ersten Drehelement (200) gelöst wird.

2. Nutzfahrzeug nach Anspruch 1, wobei
das erste Drehelement (200) einen ersten Spannvorrichtungs-Eingriffsteil (201) umfasst,
das zweite Drehelement (300) einen zweiten Spannvorrichtungs-Eingriffsteil (301) umfasst, und
die Spannvorrichtung (600) dazu veranlasst wird, mit dem ersten Spannvorrichtungs-Eingriffsteil (201) und dem zweiten Spannvorrichtungs-Eingriffsteil (301) einzugreifen, und dadurch das erste Drehelement (200) mit dem zweiten Drehelement (300) verbunden wird.

3. Nutzfahrzeug nach Anspruch 1 oder 2, wobei
das erste Drehelement (200) an eine hintere Seite des Klammerteils (400) befestigt ist, und
das zweite Drehelement (300) an eine vordere Seite des Klammerteils (400) befestigt ist.

4. Nutzfahrzeug nach einem der Ansprüche 1 bis 3, wobei
der Klammerteil (400) an einer hinteren Seite einen geschützten Raum bildet, um das ersten Drehelement (200) aufzunehmen.

5. Nutzfahrzeug nach Anspruch 2, wobei
der erste Spannvorrichtungs-Eingriffsteil (201) ein Durchdringungsloch ist,
der zweite Spannvorrichtungs-Eingriffsteil (301) ein Durchdringungsloch ist, und
wenn die Haube (70), die geschlossen war, geöffnet wird, die Spannvorrichtung (600) nach hinten durch den zweiten Spannvorrichtungs-Eingriffsteil (301) eingeführt wird, ein Fenster (413) auf dem Klammerteil (400) und dem ersten Spannvorrichtungs-Eingriffsteil (201) bereitgestellt ist und veranlasst wird, gegen ein Spannvorrichtungs-Anschlagelement (304) anzuschlagen, das auf einer vorderen Seite des zweiten Drehelements (300) steht.

## Revendications

1. Véhicule de travail comprenant :
un capot pouvant s'ouvrir et se fermer (70), qui recouvre un compartiment moteur (60) ;
un dispositif de fixation de capot (100) prévu dans le compartiment moteur (60), qui verrouille le capot fermé (70) ; et
un élément de verrouillage (500) prévu sur une paroi interne du capot (70), qui se met en prise avec le dispositif de fixation de capot (100), dans lequel :
le dispositif de fixation de capot (100) possède : un premier élément rotatif (200) ; un second élément rotatif (300) ; et une partie de support (400) dont chacun parmi le premier élément rotatif (200) et le second élément rotatif (300) est fixé afin de pouvoir tourner indépendamment, et
lorsque le capot (70) est fermé, l'élément de verrouillage (500) se met en prise avec le premier élément rotatif (200),
**caractérisé en ce que** :
lorsque le capot (70) qui a été fermé, est ouvert, le premier élément rotatif (200) est raccordé avec le second élément rotatif (300) en utilisant un gabarit (600), le second élément rotatif (300) tourne en utilisant le gabarit (600), et ainsi la mise en prise de l'élément de verrouillage (500) avec le premier élément rotatif (200) est supprimée.

2. Véhicule de travail selon la revendication 1, dans lequel :
le premier élément rotatif (200) possède une première partie de mise en prise de gabarit (201),
le second élément rotatif (300) possède une seconde partie de mise en prise de gabarit (301), et
le gabarit (600) est fait pour se mettre en prise avec la première partie de mise en prise de gabarit (201) et la seconde partie de mise en prise de gabarit (301), et ainsi le premier élément rotatif (200) est raccordé avec le second élément rotatif (300).

3. Véhicule de travail selon la revendication 1 ou 2, dans lequel :
le premier élément rotatif (200) est fixé à une face arrière de la partie de support (400), et
le second élément rotatif (300) est fixé à une face avant de la partie de support (400).

4. Véhicule de travail selon l'une quelconque des revendications 1 à 3, dans lequel :
la partie de support (400) forme, au niveau d'un côté arrière, un espace protégé pour loger le premier élément rotatif (200).

5. Véhicule de travail selon la revendication 2, dans lequel :
la première partie de mise en prise de gabarit (201) est un trou pénétrant,
la seconde partie de mise en prise de gabarit (301) est un trou pénétrant, et
lorsque le capot (70) qui a été fermé, est ouvert, le gabarit (600) est inséré vers l'arrière à travers la seconde partie de mise en prise de gabarit (301), une fenêtre (413) prévue sur la partie de support (400) et la première partie de mise en prise de gabarit (201), et est fait pour venir en butée sur un élément de butée de gabarit (304) se trouvant sur une face avant du second élément rotatif (300).
